# EUROPÄISCHE PATENTSCHRIFT

(11) **EP 1 360 644 B1**
(45) Veröffentlichungstag und Bekanntmachung des Hinweises auf die Patenterteilung: **28.07.2004**
(21) Anmeldenummer: 02714109.2
(22) Anmeldetag: 24.01.2002
(51) Int. Cl.: G06K 19/073

(54) **SICHERHEITSMODUL MIT FLÜCHTIGEM SPEICHER ZUR SPEICHERUNG EINES ALGORITHMUSCODES**
SECURITY MODULE COMPRISING A VOLATILE MEMORY FOR STORING AN ALGORITHM CODE
MODULE DE PROTECTION A MEMOIRE VOLATILE POUR STOCKER UN CODE D'ALGORITHME

(30) Priorität: 16.02.2001 DE 10107373
(43) Veröffentlichungstag der Anmeldung: 12.11.2003
(73) Patentinhaber: Infineon Technologies AG, 81669 München (DE)
(72) Erfinder: JANKE, Marcus, 81539 München (DE)
(74) Vertreter: Zinkler, Franz, Dipl.-Ing.
(86) Internationale Anmeldenummer: PCT/EP2002/000733
(87) Internationale Veröffentlichungsnummer: WO 2002/067191

(56) Entgegenhaltungen:
- WO-A-00/16225
- WO-A-98/43212
- US-A- 4 777 355
- RANKL WOLFGANG; EFFING WOLFGANG : "HANDBUCH DER CHIPKARTEN. AUFBAU - FUNKTIONSWEISE - EINSATZ VON SMART CARDS" 1999 , CARL HANSER VERLAG , MUENCHEN, DE XP002201839 ISBN: 3-446-21115-2 Seite 191 -Seite 193 Seite 255, Absatz 3 Seite 252 -Seite 261
- PATENT ABSTRACTS OF JAPAN vol. 2000, no. 06, 22. September 2000 (2000-09-22) & JP 2000 076139 A (NIPPON TELEGR &TELEPH CORP <NTT>), 14. März 2000 (2000-03-14)

## Beschreibung

Die vorliegende Erfindung bezieht sich auf Sicherheitsmodule, wie sie beispielsweise bei Pay-TV-Anwendungen, Kreditkarten, Telefonkarten oder als TPM-Steckkarten, verwendet werden, und bezieht sich insbesondere auf eine Sicherung des für die Kommunikation zwischen Sicherheitsmodul und Terminal verwendeten Algorithmuscodes gegen äußere Attacken.

Mit der zunehmenden Verbreitung von bargeldlosem Zahlungsverkehr und der zunehmenden informationstechnischen Vernetzung bis in die einzelnen Haushalte, wie z. B. bei Pay-TV-Anwendungen, wächst der Bedarf nach Kryptographiealgorithmen, um digitale Signaturen, Authentifikationen und Verschlüsselungsaufgaben durchführen zu können. Bekannte Kryptographiealgorithmen umfassen asymmetrische Verschlüsselungsalgorithmen, wie z. B. den RSA-Algorithmus, symmetrische Verschlüsselungsverfahren, wie z. B. das DES-Verfahren, und auf elliptischen Kurven basierende Verfahren.

Um die durch die Kryptographiealgorithmen vorgeschriebenen Berechnungen im Alltag einerseits in akzeptabler Geschwindigkeit und andererseits für den Benutzer so bequem wie möglich durchführen zu können, werden Chipkarten, wie z. B. Smartcards oder Signaturkarten, eingesetzt, welche zur Implementierung des Kryptographiealgorithmus einen eigens vorgesehenen Kryptographieprozessor umfassen. Je nach Applikation bzw. Anwendung muß der Kryptographieprozessor in der Lage sein, Authentifikationen, Signaturen, Zertifizierungen und Ver- bzw. Entschlüsselungen nach verschiedenen Kryptographiealgorithmen vorzunehmen. Neben der Implementierung der Kryptographiealgorithmen befinden sich auf der Chipkarte gespeicherte, chipkartenspezifische Informationen, wie z. B. ein geheimer Schlüssel und in dem Fall einer Kreditkarte die Kreditkartennummer, die Kontonummer und das Guthaben und in dem Fall einer Pay-TV-Smartcard eine Smartcard-ID, eine Kunden-ID und sonstige kundenspezifische Informationen. Dem Benutzer einer Chipkarte wird es durch die Chipkarte ermöglicht, auf einfache und effektive Weise bestimmte Transaktionen, wie z. B. eine Abbuchung, an extra vorgesehenen Terminals oder sonstigen Endgeräten, wie z. B. Pay-TV-Decodern, vorzunehmen. Hierbei sorgen die auf der Chipkarte implementierten Kryptographiealgorithmen für einen Schutz des Chipkartenverkehrs gegen kriminelle Übergriffe.

Um die Chipkarten-Terminal-Systeme gegen kriminelle Übergriffe zu schützen, werden zwischen Terminal und Chipkarte spezielle Protokolle verwendet, die beispielsweise eine gegenseitige Authentifikation und Ver- und Entschlüsselungen umfassen, die die in dem Kryptographieprozessor implementierten Kryptographiealgorithmen verwenden. Ein Problem bei herkömmlichen Chipkarten besteht darin, daß sich bei denselben die zum Einsatz kommenden Algorithmen für die geheimen Funktionen, wie z. B. zur Verschlüsselung, in Form einer festen Verdrahtung und/oder in gespeicherter Form fest auf der Chipkarte befinden und somit einem Ausspähen von potentiellen Angreifern ausgeliefert sind. Das Ausspähen von in Chipkarten implementierten Kryptographiealgorithmen durch einen Angreifer umfaßt beispielsweise das chemische Abtragen der Schaltungsstruktur des Kryptographieprozessors und das optische Analysieren der freigelegten Halbleiterstrukturen. Gelingt es einem Angreifer anhand der sich in seinem Besitz befindlichen Chipkarte an den in derselben implementierten Kryptographiealgorithmus zu gelangen, so wird es dem Angreifer aufgrund der Kenntnis des Kryptographiealgorithmus und damit durch die Ausführbarkeit desselben ermöglicht, bestimmte Attacken auf die Chipkarte auszuüben, um geheime Daten, wie z. B. den geheimen Schlüssel oder sonstige sicherheitskritische Daten der Chipkarte zu gewinnen. Bei Kenntnis des zugrunde liegenden Kryptographiealgorithmus haben die Attacken eine weitaus größere Aussicht auf Erfolg, und folglich ist die Sicherheitskette des Chipkartenverkehrs gefährdet.

Dem Problem des Ausspähens wird bei herkömmlichen Chipkarten lediglich durch bestimmte Hardwareverfahren bzw. -technologien begegnet, wie z. B. durch das Hidden-Contact-Verfahren (Versteckte-Kontakte-Verfahren). Bei diesem Verfahren wird versucht, die optische Analyse abgetragener Halbleiterstrukturen und damit das Rückschließen auf die zugrundeliegende elektronische Schaltung durch versteckte Kontakte und durch eine Verwendung von speziellen Layout-Bibliotheken für die zugrundeliegenden Gatter, bei der sich verschiedene Gatter, wie z. B. ANDs und ORs, lediglich durch eine unterschiedliche Dotierung voneinander unterscheiden, zu verhindern. Diese hardwaremäßigen Verschleierungsmaßnahmen erhöhen zwar den Aufwand zum Herausfinden des zugrundeliegenden Kryptographiealgorithmus durch den potentiellen Angreifer, erhöhen aber andererseits den Schaltungs- und Entwurfsaufwand, die Chipfläche und damit die Kosten des Kryptographieprozessors bzw. der Chipkarte.

Eine Chipkarte mit erhöhter Sicherheit gegen Fremdattacken und einem reduzierten Schaltungsaufwand stellt gerade in Hinblick auf das hohe Marktpotential und die hohen Stückzahlen, in denen Chipkarten gefertigt werden, eine hohe Attraktivität für Chipkartenhersteller dar.

Die US 4,777,355 beschreibt eine IC-Karte und ein System zum Überprüfen der Funktionalität derselben und adressiert das Problem, daß einerseits an Einzel-Chip-IC-Karten nach ihrer Fertigstellung keine Programmänderungen mehr durchgeführt werden können und andererseits bei Mehr-Chip-IC-Karten mit einem Extra-Chip zur Speicherung Sicherheitsprobleme durch das Offenlegen des Datenbusses auftreten. In dieser Druckschrift sucht man die Vorteile beider IC-Karten-Typen miteinander zu verbinden, nämlich die Integrierung in einen Chip und die damit verbundene Integrierung des Datenbusses und Verhinderung des Zugriffes auf die gespeicherten Daten auf der einen Seite und die Ladbarkeit von externen Programmen auf der anderen Seite. Gemäß einem weiteren Aspekt wird die Aufgabe gelöst, IC-Karten vor ihrer Ausgabe zu Prüfen, um sicherzustellen, daß sie die Standards erfüllen, was aufgrund der begrenzten Programmkapazität von IC-Karten durch feste Integration in die IC-Karte schwierig wäre. Demgemäß betrifft die Druckschrift gemäß einem ersten Aspekt eine IC-Karte mit einem Prozessor, einem ROM-Speicher und einem programmierbaren Speicher, die in der Lage ist, Programme auszuführen, die in den programmierbaren Speicher von einer externen Vorrichtung heruntergeladen werden. Als mögliche herunterladbare Programme werden Unterstützungsbetriebsprogramme angegeben, wie sie durch Änderungen in dem IC-Kartensystem notwendig werden. Diese Programme können dann durch den Prozessor so oft wie notwendig aufgerufen werden, wenn die IC-Karte in dem Kartensystem verwendet wird. Als eine weitere Art von Programmen wird gemäß dem zweiten Aspekt von Dokument D1 ein Überprüfungsprogramm zum Überprüfen bestimmter Funktionen der IC-Karte angegeben, wobei die Durchführung dieses Überprüfungsprogrammes unmittelbar nach dem Ende eines Herunterladens des Programmes durchgeführt werden kann. Ein Überprüfungsprogramm wird in den programmierbaren Speicher heruntergeladen und ausgeführt. Bei der Ausführung werden zu untersuchende Adressen abwechselnd mit 1 und 0 beschrieben. Das Ergebnis der Überprüfung wird zu der externen Vorrichtung ausgegeben, die daraufhin das Ergebnis überprüft. Sobald die Überprüfung abgeschlossen ist, wird das Überprüfungsprogramm gelöscht. Als Beispiele für den programmierbaren Speicher werden ein EEPROM, ein CMOS-RAM, ein CMOS-ROM und ein EPROM angegeben.

In Ranke, Wolfgang et al., "Handbuch der Chipkarten. Aufbau - Funktionsweise - Einsatz von Smart Cards", Carl Hanser Verlag, München 1999 werden verschiedene Authentisierungsverfahren zwischen Chipkarte und Terminal beschrieben. Insbesondere bezieht sich die Druckschrift auf Chipkarten-Betriebssysteme mit nachladbarem Programm-Code. Es werden verschiedene Vorteile angegeben, die sich aus der Nachladbarkeit von Programmcodes in Chipkarten ergeben, wie z.B. die Möglichkeit der Beseitigung von Programmfehlern im vollständig personalisierten Karten, und die Möglichkeit, daß ein Anwendungsanbieter einen nur ihm selbst bekannten Verschlüsselungsalgorithmus in die Chipkarte einbringt. Zwei Wege werden zum Nachladen angegeben, nämlich das Nachladen in Form von Native Code oder in Form eines zu interpretierenden ausführbaren Programmcodes. Die Probleme beim Nachladen von Native Codes, nämlich die fehlende Überwachungsmöglichkeit von heruntergeladenem ausführbaren Code, sei durch eine gegenseitige Authentisierung vor dem eigentlichen Laden des Programmcodes und das Vorsehen einer MMU lösbar. Als nachladbare Native Codes werden exemplarisch komplexe Algorithmen, wie z.B. DES, IDEA angegeben.

Die Aufgabe der vorliegenden Erfindung besteht darin, ein Sicherheitsmodul, ein Terminal und Verfahren zu schaffen, so daß ein sicherer Sicherheitsmodulverkehr gewährleistet werden kann.

Diese Aufgabe wird durch ein Sicherheitsmodul gemäß Anspruch 1, ein Terminal gemäß Anspruch 13 und ein Verfahren gemäß Anspruch 11, 14 oder 15 gelöst.

Der vorliegenden Erfindung liegt die Erkenntnis zugrunde, daß die Sicherheit eines Sicherheitsmoduls, wie z. B. einer Chipkarte, gegen Fremdattacken dadurch gesteigert werden kann, daß zumindest ein Teil des Algorithmuscodes nicht fest auf dem Sicherheitsmodul gespeichert wird, sondern daß dieser fehlende Teil des Algorithmuscodes vielmehr lediglich während der Kommunikation zwischen dem Terminal und dem Sicherheitsmodul in einem flüchtigen Speicher des Sicherheitsmoduls gespeichert wird, wobei der Algorithmuscode sicherheitskritische Funktionen, wie z. B. Abbuchungsfunktionen, oder Kryptographiealgorithmen umfaßt oder allgemein die Verarbeitung von Geheimnissen betrifft. Hierdurch wird wirksam verhindert, daß sich auf einem in der Gewalt eines potentiellen Angreifers befindlichen Sicherheitsmodul der vollständige Algorithmuscode befindet, und folglich wird es dem potentiellen Angreifer unmöglich gemacht, zur Ausspähung von geheimen Schlüsseln oder anderer geheimer Daten auf den Algorithmuscode zuzugreifen und denselben gemäß bestimmter Attacke-Verfahren auszuführen, wie z. B. unter Verwendung von Fault-Attacks (Fehlerattacken) oder Informations-Leck-Attacken. Anders ausgedrückt, wird es einem potentiellen Angreifer nahezu unmöglich gemacht, den Algorithmuscode, wie z. B. einen Verschlüsselungsalgorithmus, mißbräuchlich zu nutzen, da derselbe nicht dauerhaft in vollständiger Form auf dem Sicherheitsmodul gespeichert ist, und sich damit außerhalb des Einsatzes an einem entsprechenden Terminal nicht in dem Besitz des Angreifers befindet.

Erfindungsgemäß umfaßt ein Sicherheitsmodul, wie z. B. eine Chipkarte, ein TPM (Trusted Plattform Module) bzw. Sicherheitsplattformmodul in Form einer Computer-Steckkarte oder eine Smartcard, zur Verwendung mit einem Terminal neben einer Datenschnittstelle, die mit dem Terminal koppelbar ist, und von dem Terminal zumindest einen Teil des Algorithmuscodes oder den vollständigen Algorithmuscode empfängt, eine Energieschnittstelle, die Versorgungsenergie empfängt, und einen flüchtigen Speicher zum Speichern des über die Datenschnittstelle empfangenen Teils des Algorithmuscodes oder des empfangenen vollständigen Algorithmuscodes, wobei der flüchtige Speicher mit der Energieschnittstelle gekoppelt ist, um mit Energie versorgt zu werden. Ein Prozessor führt den Algorithmuscode aus, um ein Algorithmuscodeergebnis zu erhalten, das zu dem Terminal lieferbar ist. Der nicht empfangene Rest des Algorithmuscodes kann beispielsweise in einem nicht-flüchtigen Speicher, wie z. B. einem ROM, des Sicherheitsmoduls gespeichert sein. Folglich befindet sich bei Fehlen einer ausreichenden Versorgungsenergie kein vollständiger Algorithmuscode in dem nicht-flüchtigen Speicher des Sicherheitsmoduls, und derselbe steht einem potentiellen Angreifer folglich nicht zur Ausführung zur Verfügung.

Ein zur Verwendung mit dem im vorhergehenden beschriebenen Sicherheitsmodul geeignetes Terminal, wie z. B. ein Bankautomat, ein Handy mit Kartenleser, ein Pay-TV-Decoder oder ein Computer mit einem Steckplatz für ein TPM, umfaßt beispielsweise eine Datenschnittstelle, die mit dem Sicherheitsmodul koppelbar ist, und die den Teil des Algorithmuscodes oder den vollständigen Algorithmuscode von dem Terminal zu dem flüchtigen Speicher des Sicherheitsmoduls sendet und das Algorithmuscodeergebnis von dem Sicherheitsmodul empfängt, sowie eine Energieschnittstelle, die die Versorgungsenergie zu dem Sicherheitsmodul liefert.

Gemäß einem speziellen Ausführungsbeispiel wird während einer Kommunikation zwischen dem Terminal und dem Sicherheitsmodul zunächst eine Authentifikation, wie z. B. eine Authentifikation nach dem Challenge- und -Response-Verfahren, zwischen dem Terminal und dem Sicherheitsmodul durchgeführt. Die Übertragung des Algorithmuscodes von dem Terminal zu dem Sicherheitsmodul erfolgt auf verschlüsselte und zertifizierte Weise, um einem Abhören bzw. Manipulieren der Kommunikationsverbindung zwischen dem Terminal und dem Sicherheitsmodul zu begegnen. In dem Terminal bzw. dem Sicherheitsmodul befinden sich hierzu geeignete Einrichtungen zur Durchführung einer Authentifikation, einer Ver- bzw. Entschlüsselung und Zertifizierung bzw. Zertifikatsüberprüfung. Um die Sicherheit zu erhöhen, und um den Zugriff eines potentiellen Angreifers auf den übertragenen Teil des Algorithmuscodes wirksam zu verhindern, kann zusätzlich eine Überwachungseinrichtung in dem Sicherheitsmodul vorgesehen sein, die, falls vorbestimmte Sicherheitsbedingungen erfüllt werden, den flüchtigen Speicher löscht. Solche Sicherheitsbedingungen können die Unterbrechung, eine Unregelmäßigkeit und eine Schwankung der Versorgungsspannung und/oder des Prozessor- oder Systemtaktes oder anderer Betriebsparameter umfassen, wie sie durch Manipulation an dem Sicherheitsmodul bewirkt werden können, während dieses mit dem Terminal in Wechselwirkung steht. In dem Fall, daß die Überwachungseinrichtung nicht vorzeitig eine Löschung des Speichers bewirkt hat, wird der flüchtige Speicher und somit der gespeicherte Teil des Algorithmuscodes spätestens bei Beendigung der Kommunikation zwischen Terminal und Sicherheitsmodul bzw. bei Unterbrechung der Versorgungsenergie, wie z. B. durch Herausziehen bzw. Entfernen des Sicherheitsmoduls aus dem Terminal, gelöscht, wodurch dieser Teil des Algorithmuscodes einem potentiellen Angreifer nicht mehr zur Ausführung im Rahmen spezieller Attacken zur Verfügung steht.

Um die Angreifbarkeit des Systems weiter zu verringern, kann es vorgesehen sein, den Teil des Algorithmuscodes intermittierend in abgewandelter Form auf wiederholte Weise von dem Terminal zu dem Sicherheitsmodul zu übertragen, und hierbei jeweils den neu übertragenen, veränderten Teil des Algorithmuscodes anstatt des alten gespeicherten Teils des Algorithmuscodes in dem flüchtigen Speicher zu speichern. Hierdurch sind Wechsel eines Kryptographiealgorithmus während der Kommunikation zwischen Terminal und Sicherheitsmodul, wie z. B. bei Pay-TV-Anwendungen, aber auch Algorithmuscodewechsel jeweils bei Initialisierung einer Terminal-Sicherheitsmodul-Kommunikation, wie z. B. bei Kreditkarten, möglich, wodurch es einem potentiellen Angreifer weiter erschwert wird, sich auf den verwendeten Algorithmuscode einzustellen, bzw. denselben zu eroieren.

Neben dem Bewahren des Algorithmuscodes des Sicherheitsmoduls vor einem Ausspähen durch einen potentiellen Angreifer besteht ein weiterer Vorteil der vorliegenden Erfindung darin, daß sie auf eine Vielzahl von Anwendungsgebieten, wie z. B. EC-Karten, Kreditkarten, Multiapplikationskarten oder Pay-TV-Smartcards, anwendbar ist. Je nach Applikation enthält der von dem Sicherheitsmodul empfangene Algorithmuscode bzw. Sicherheitsfunktionscode Teile eines Codes für sicherheitskritische Funktionen oder einen oder mehrere Kryptographiealgorithmen des Sicherheitsmoduls. Für Chipkartenhersteller oder Hersteller von Sicherheitsmodulen bedeutet die vielseitige Anwendbarkeit sowie die erhöhte Sicherheit gegen potentielle Angriffe eine erhöhte Marktakzeptanz und somit einen größeren Marktanteil. Zudem wird die Sicherheit des Sicherheitsmoduls auf kostengünstige Weise erhöht, da die erhöhte Sicherheit durch softwaremäßiges Laden des flüchtigen Speichers erzielt wird. Die herkömmlichen und aufwendigen Hardwaremaßnahmen zum Schutz des Algorithmuscodes vor potentiellen Angreifern, wie sie im vorhergehenden beschrieben wurden, können entweder zusätzlich vorgenommen oder aber durch kostengünstigere Hardwareverfahren ersetzt werden, da sich die sicherheitskritischen Funktionen oder der zugrundeliegende Kryptographiealgorithmus des Sicherheitsmoduls nicht dauerhaft auf der Chipkarte befinden.

Weiterbildungen und weitere alternative Ausführungsbeispiele der vorliegenden Erfindung sind in den beiliegenden Unteransprüchen definiert.

Bevorzugte Ausführungsbeispiele der vorliegenden Erfindung werden nachfolgend bezugnehmend auf die beiliegenden Zeichnungen näher erläutert. Es zeigen:
- Fig. 1: ein schematisches Diagramm, das den Ablauf während der Kommunikation einer Chipkarte mit einem Terminal gemäß der vorliegenden Erfindung veranschaulicht;
- Fig. 2: ein Blockdiagramm eines Chipkartenaufbaus gemäß einem Ausführungsbeispiel der vorliegenden Erfindung; und
- Fig. 3: einen Terminalaufbau gemäß einem Ausführungsbeispiel der vorliegenden Erfindung.

Es wird darauf hingewiesen, daß sich die folgende detaillierte Beschreibung bestimmter Ausführungsbeispiele der vorliegenden Erfindung lediglich exemplarisch auf Chipkarten-Anwendungen bezieht, und daß die vorliegende Erfindung statt dessen auch auf andere Sicherheitsmodule anwendbar ist, wie z.B. auf TPMs in Form von Steckkarten, wobei die folgende Beschreibung ohne weiteres auf solche Anwendungen übertragbar ist. Dementsprechend bezieht sich die folgende Beschreibung auch lediglich exemplarisch auf Terminals für Chipkarten, wie z.B. Bankautomaten, obwohl ein Terminal der vorliegenden Erfindung bei anderen Anwendungsgebieten beispielsweise auch ein Computer sein kann, in dessen Steckplätzen sich ein TPM befindet, oder ein Handy, in dessen Kartenleser sich eine Smartcard befindet, oder das Terminal allgemein jede Vorrichtung sein kann, die in der Lage ist, mit dem Sicherheitsmodul zu kommunizieren.

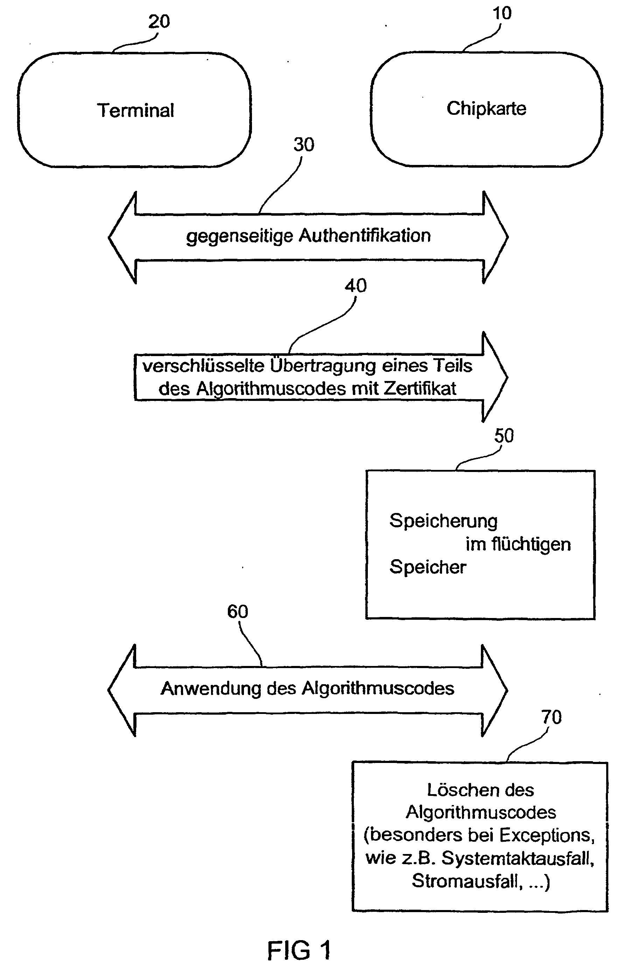

Es wird zunächst auf Fig. 1 Bezug genommen, die den Ablauf während einer Kommunikation zwischen einem Terminal und einer Chipkarte darstellt, wie er sich beispielsweise ergibt, wenn eine Chipkarte in ein Terminal eingeführt wird. In dem Fall des gebührenpflichtigen Rundfunks kann die Chipkarte beispielsweise eine Pay-TV-Smartcard und das Terminal das jeweilige Endgerät bzw. der Decoder eines Pay-TV-Kunden sein. In dem Fall, daß die Chipkarte eine Kreditkarte ist, ist das Terminal beispielsweise ein Bankautomat.

In Fig. 1 sind die Chipkarte 10 und das Terminal 20 nebeneinander durch Rechtecke mit abgerundeten Ecken gezeigt. Darunter sind schematisch durch Pfeile und Blöcke in der Reihenfolge ihres Auftretens von oben nach unten die verschiedenen Schritte dargestellt, die während der Kommunikation bzw. Wechselwirkung der Chipkarte 10 mit dem Terminal 20 durchgeführt werden. Die Pfeilrichtungen geben die Richtungen der Datenflüsse an, in die Daten gesendet werden, während die Blöcke Maßnahmen darstellen, die in der Chipkarte 10 durchgeführt werden.

Die in Fig. 1 dargestellten Schritte setzen voraus, daß bereits eine Kommunikation zwischen dem Terminal und der Chipkarte möglich ist, was beispielsweise nach Einfügen der Chipkarte in das Terminal der Fall sein kann, wobei das Terminal 20 ein Kontaktlos- oder ein Kontakt-Terminal sein kann, und die Kommunikationsverbindung somit kontaktlos oder über einen Kontakt stattfinden kann. Zur Kommunikation ist es ferner erforderlich, daß die Chipkarte 10 von dem Terminal 20 mit Energie versorgt wird, was ebenfalls entweder kontaktlos über eine elektromagnetische Strahlung oder über einen Kontakt durchgeführt werden kann. Nach der Herstellung der Kommunikationsverbindung zwischen dem Terminal 20 und der Chipkarte 10 sowie der Versorgung der Chipkarte 10 mit Versorgungsenergie können zunächst Schritte zur Initialisierung durchgeführten werden, wie z. B. die gegenseitige Vereinbarung des maßgebenden Protokolls usw.

Nach den Schritten (nicht gezeigt) zur Energieversorgung der Chipkarte 10, zur Herstellung der Kommunikationsverbindung sowie zur Initialisierung der Kommunikation zwischen dem Terminal 20 und der Chipkarte 10 wird in einem Schritt 30 eine gegenseitige Authentifikation zwischen dem Terminal 20 und der Chipkarte 10 durchgeführt, wie z. B. eine Authentifikation nach dem Challenge-Und-Response-Verfahren. Die gegenseitige Authentifikation kann beispielsweise eine PIN- (Personal Identifikation Number = Personenkennzahl) Eingabe durch den Kartenbenutzer umfassen, wobei zur gegenseitigen Authentifikation 30 beispielsweise auf der Chipkarte 10 gespeicherte chipkartenspezifische Daten, wie z. B. eine Chipkartenidentifikationsnummer und eine Personenkennzahl, in Verbindung mit einem auf der Chipkarte gespeicherten Chipkartenschlüssel und einem auf der Chipkarte gespeicherten Authentifizierungscode, der einen Kryptographiealgorithmus, wie z. B. einen symmetrischen oder einen asymmetrischen kryptographischen Algorithmus, darstellt, verwendet werden können. Die Authentifikation dient dazu, um sicherzustellen, daß nur zugelassene Chipkarten mit zugelassenen Terminals kommunizieren können. Ergibt die Authentifikation einen Fehler, so wird die Kommunikationsverbindung abgebrochen.

Nach erfolgreicher gegenseitiger Authentifikation 30 sendet das Terminal 20 in einem Schritt 40 einen Teil des Algorithmuscodes verschlüsselt und zertifiziert an die Chipkarte 10. Die Verschlüsselung des übertragenen Teils des Algorithmuscodes schützt die Übertragung vor einem Abhören durch einen potentiellen Angreifer, während die Zertifizierung in dem Terminal 20 der Chipkarte 10 eine Garantie über die Herkunft des übertragenen Teils des Algorithmuscodes geben soll. Die Chipkarte 10 umfaßt zur Entschlüsselung des übertragenen Teils des Algorithmuscodes und zur Überprüfung des Zertifikats ebenso wie zur Durchführung der gegenseitigen Authentifikation 30 geeignete Authentifikations-, Entschlüsselungs- und Zertifikatsüberprüfungseinrichtungen, die sich aus einem Teil der Hardware und aus in einem nicht-flüchtigen Speicher der Chipkarte gespeicherten Codes, wie z. B. dem Authentifikationscode, zusammensetzen. Die Kryptographiealgorithmen, die der gegenseitigen Authentifikation 30 und der Verschlüsselung und Zertifizierung 40 zugrundeliegen, können symmetrische oder asymmetrische Kryptographieverfahren umfassen, wie z. B. den RSA- oder den DES-Algorithmus, oder einen beliebigen anderen Kryptographiealgorithmus.

Falls die Zertifikatsüberprüfung ergibt, daß die Echtheit des Zertifikats fehlt, wird die Kommunikation zwischen dem Terminal 20 und der Chipkarte 10 abgebrochen, und es kann vorgesehen sein, daß die Chipkarte 10 für eine vorbestimmte Zeit keine Verarbeitungen mehr durchführt. Hierdurch wird vermieden, daß ein potentieller Angreifer die Kommunikationsverbindung zwischen dem Terminal 20 und der Chipkarte 10 anzapft und einen "falschen" Code in den flüchtigen Speicher der Chipkarte 10 einspeist, der bei Ausführung durch die Chipkarte 10 beispielsweise die Ausgabe geheimer, auf der Chipkarte 10 gespeicherter Daten bewirken könnte.

In einem Schritt 50 wird, wenn die Zertifikatsüberprüfung die Echtheit des Zertifikats ergab, der übertragene Teil des Algorithmuscodes in einem flüchtigen Speicher der Chipkarte 10 in entweder verschlüsselter oder entschlüsselter Form gespeichert. Je nach verschlüsselter oder entschlüsselter Speicherung wird der Algorithmuscode vor der Speicherung oder vor der Ausführung durch einen Kryptographieprozessor auf der Chipkarte 10 entschlüsselt. Der Algorithmuscode, von dem ein Teil in dem Schritt 40 übertragen wird, kann den Programmcode eines oder einer Mehrzahl von sicherheitskritischen Funktionen der Chipkarte 10, wie z. B. eine Ab- oder Aufbuchungsfunktion zum Be- oder Entladen der Chipkarte 10, oder den Programmcode zur Durchführung eines während des weiteren Kommunikationsablaufes erforderlichen kryptographischen Algorithmus umfassen, wie z. B. ,aber nicht ausschließlich, ein symmetrisches oder asymmetrisches Kryptographieverfahren, einen RSA-Algorithmus, eine Verschlüsselung nach dem DES-Standard, ein Elliptisches-Kurven-Verfahren oder einen anderen geheimen Algorithmus. In dem Fall einer Pay-TV-Anwendung umfaßt der Algorithmuscode beispielsweise Informationen bezüglich der Entschlüsselung der Fernsehdaten eines gebührenpflichtigen Programmes, wie z. B. die Repermutation der Bildzeilen eines Bildes der Fernsehdaten. Folglich befindet sich der zu schützende Algorithmuscode in vollständiger Form lediglich zur Laufzeit der Kommunikation zwischen dem Terminal 20 und der Chipkarte 10 auf der Chipkarte 10.

In einem Schritt 60 wird der sich nun in vollständiger Form auf der Chipkarte 10 befindliche Algorithmuscode angewendet und von einem auf der Chipkarte 10 befindlichen Prozessor ausgeführt. In dem im vorhergehenden erwähnten Pay-TV-Beispiel führt der Prozessor der Chipkarte 10 beispielsweise die Repermutation der Bildzeilen der Fernsehbilder anhand des gespeicherten Algorithmuscodes durch. Bei einer Debbit-Anwendung der Chipkarte 10, wie z. B. bei Telefonkarten, wird beispielsweise der eine Ab- bzw. Aufbuchungsfunktion angebende Algorithmuscode verwendet, um ein auf der Chipkarte 10 befindliches Guthaben ab- oder aufzubuchen. Bei Kreditanwendungen umfaßt der Schritt 60 beispielsweise die Ausführung des einen kryptographischen Algorithmus angebenden Algorithmuscodes durch einen Kryptographieprozessor der Chipkarte 10, um beispielsweise Überweisungsaufträge zu erteilen.

In einem Schritt 70 wird der in dem flüchtigen Speicher gespeicherte Teil des Algorithmuscodes wieder gelöscht. Die Löschung des Algorithmuscodes kann beispielsweise durch das Herausnehmen der Chipkarte 10 aus dem Terminal 20 durch den Kartenbenutzer und damit das Unterbrechen der Versorgungsenergiezufuhr von dem Terminal 20 zu der Chipkarte 10 bewirkt werden. Um die Versuche von potentiellen Angreifern, den flüchtigen Speicher, wie z. B. einem RAM, vor einem Verlust des gespeicherten Teils des Algorithmuscodes zu schützen, zu verhindern, wodurch dieselben in den Besitz des vollständigen Algorithmuscodes kämen, kann auf der Chipkarte 10 eine spezielle Überwachungseinrichtung vorgesehen sein, die eine aktive Löschung des flüchtigen Speichers der Chipkarte 10 auch dann bewirkt, falls eine Überwachung ergibt, daß spezielle Sicherheitsbedingungen erfüllt sind, wie z. B. die Unterbrechung des Systemtaktes, die Unterbrechung der Versorgungsenergiezufuhr oder sonstige Anzeichen für einen möglichen Angriff, wie z. B. Spannungsschwankungen oder dergleichen. Folglich befindet sich der Algorithmuscode nach dem Einsatz der Chipkarte 10 in dem Terminal 20 oder einer Störung des Kommunikationsablaufes nicht mehr auf der Chipkarte 10, und ist somit nicht mehr den potentiellen Angriffen und dem Ausspähen durch potentieller Angreifer ausgeliefert. Ein Angreifer, der im Besitz der Chipkarte ist, kann keine Sicherheitsberechnungen basierend auf dem vollständigen Algorithmuscode ausführen, da sich derselbe nicht vollständig in seinem Zugriffsbereich befindet. Das Ausspähen von Schlüsseln oder Algorithmen wird somit wirksam unterbunden.

Nachdem bezugnehmend auf Fig. 1 der Ablauf während der Kommunikation einer Chipkarte mit einem Terminal beschrieben worden ist, werden im folgenden zunächst verschiedene Möglichkeiten beschrieben, welche Teile eines Algorithmuscodes von dem Terminal zu dem flüchtigen Speicher der Chipkarte übertragen werden. In dem Fall, daß der Algorithmuscode den Programmcode eines geheimen, noch nicht bekannten Kryptographiealgorithmusses enthält, kann es beispielsweise vorteilhaft sein, den Algorithmuscode vollständig von dem Terminal in den flüchtigen Speicher der Chipkarte zu übertragen, wodurch dieser geheime Kryptographiealgorithmus wirksam vor dem Ausspähen durch einen potentiellen Angreifer geschützt wäre.

In dem Fall, daß der übertragene Teil des Algorithmuscodes einen Teil eines Programmcodes für einen bekannten Kryptographiealgorithmus enthält, umfaßt der übertragene Teil des Programmcodes beispielsweise Speicheradressen, in denen die der kryptologischen Berechnung zugrundeliegenden Berechnungskomponenten gespeichert sind, wodurch wirksam vermieden wird, daß ein potentieller Angreifer, der im Besitz der Chipkarte ist, die auf diesem Kryptographiealgorithmus basierenden Sicherheitsberechnungen durchführen kann, da zur Ausführung des Programmcodes bzw. für die hierzu erforderlichen Speicherzugriffe durch den Prozessor der Chipkarte die erforderlichen Speicheradressen fehlen.

In dem Fall eines bekannten Kryptographiealgorithmusses können in dem übertragenen Teil des Algorithmuscodes Sprungadressen umfaßt sein, die entweder als Startadresse auf den Anfang eines bestimmten Programmcodes oder als bedingte oder unbedingte Programmsprünge auf die Anfänge bestimmter Teilroutinen zeigen. Ohne Kenntnis dieser Sprungadressen wird es einem Angreifer sehr schwierig gemacht, die sich in seiner Gewalt befindliche Chipkarte auszuspähen.

Bei einem speziellen Beispiel können auf der Chipkarte 10 eine Mehrzahl von Programmcodes für verschiedene Kryptographiealgorithmen vorgesehen sein, wobei der übertragene Teil des Algorithmuscodes eine Anfangsadresse eines bestimmten der verschiedenen Kryptographiealgorithmenprogrammcodes enthält, der gerade von dem Terminal ausgewählt worden ist. Das Terminal wählt beispielsweise für jeden neuen Chipkarte-Terminal-Kommunikationsvorgang einen neuen Kryptographiealgorithmus der Mehrzahl von Kryptographiealgorithmen aus, oder die Auswahl wird während eines Kommunikationsvorganges dynamisch mehrmals neu durchgeführt, um den ausgewählten Kryptographiealgorithmus dynamisch zu verändern.

Es kann ferner vorgesehen sein, daß der übertragene Teil des Algorithmuscodes Startadressen, Sprungadressen oder Speicheradressen eines Programmcodes enthält, der zur Abbuchung oder Aufbuchung oder für sonstige sicherheitskritische Funktionen der Chipkarte erforderlich ist. Ferner ist es möglich, daß die in Fig. 1 gezeigten Schritte 40, 50 und 60 wiederholt werden, wobei der übertragene Teil des Algorithmuscodes auf vorbestimmte Weise geändert wird. Bei jedem Durchgang wird der alte in dem flüchtigen Speicher der Chipkarte gespeicherte Teil des Algorithmuscodes durch den neu übertragenen Teil des Algorithmuscodes überschrieben, der daraufhin von dem Prozessor der Chipkarte ausgeführt wird. Durch diese dynamische Modifizierung des in dem flüchtigen Speicher gespeicherten Teils des Algorithmuscodes wird eine zusätzliche Sicherheit erzielt.

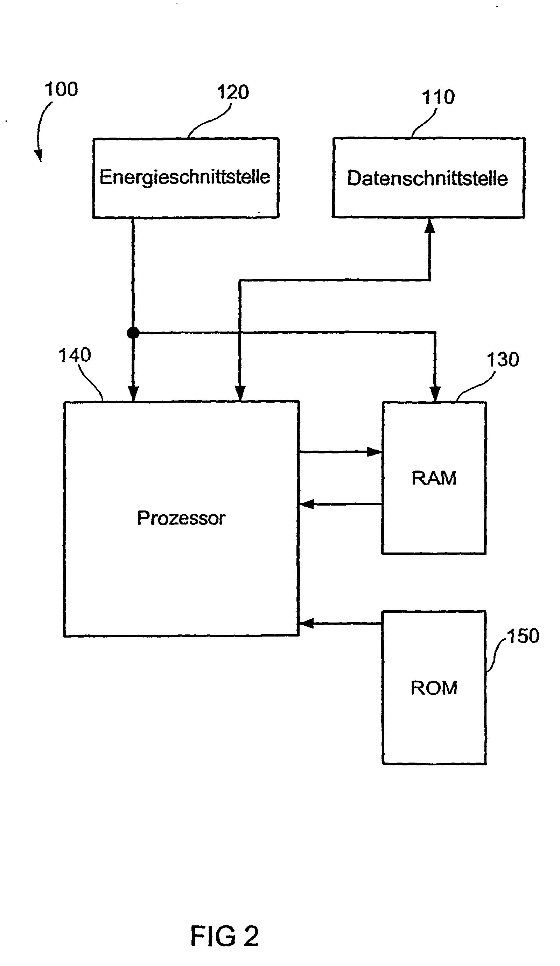

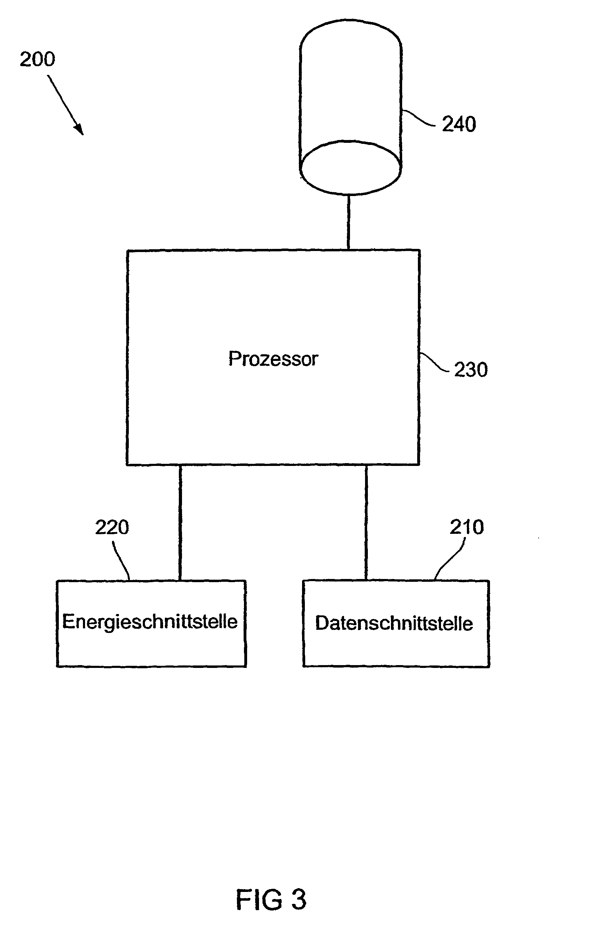

Bezugnehmend auf Fig. 2 und Fig. 3 werden nun im folgenden mögliche Ausführungsbeispiele für den Aufbau einer Chipkarte bzw. eines Terminals beschrieben. Fig. 2 zeigt ein Blockschaltbild einer Chipkarte, die allgemein mit 100 angezeigt wird. Die Chipkarte 100 umfaßt eine Datenschnittstelle 110, eine Energieschnittstelle 120, einen RAM 130, einen Prozessor 140 und einen ROM 150. Die Datenschnittstelle 110 ist beispielsweise über eine kontaktlose Kopplung oder über einen Kontakt mit einem Terminal (nicht gezeigt) koppelbar und ist in der Lage, Daten von der Chipkarte zu dem Terminal zu senden und umgekehrt Daten von dem Terminal zu empfangen. Die Datenschnittstelle 110 ist mit dem Prozessor 140 verbunden, wodurch die zu sendenden und die empfangenen Daten von bzw. zu dem Prozessor 140 übertragen werden können. Die Energieschnittstelle 120 ist ebenfalls mit dem Terminal koppelbar, um von dem Terminal Versorgungsenergie in Form von beispielsweise elektromagnetischer Energie oder einer Versorgungsspannung, zu erhalten. Die Energieschnittstelle 120 verteilt die Versorgungsenergie auf den Prozessor 140 und den RAM 130 auf.

Der Prozessor 140 besteht beispielsweise aus einer CPU (nicht gezeigt) und mehreren Kryptocoprozessoren (nicht gezeigt), die von der CPU gesteuert werden und für spezielle Berechnungen ausgestaltet sind, die für den einen oder die mehreren Kryptographiealgorithmen, die in der Chipkarte 100 implementiert sind, erforderlich sind, wie z. B. modulare oder arithmetische Berechnungen. Die CPU führt neben der Steuerung der Kryptocoprozessoren ferner die Kommunikation über die Datenschnittstelle 110 mit dem Terminal und Speicherzugriffe auf den mit dem Prozessor 140 verbundenen ROM 150 aus. Auf dem ROM 150 befinden sich beispielsweise chipkartenspezifische Informationen, wie z. B. eine Chipkartenidentifikationsnummer, eine Personenkennzahl, eine Kontonummer, ein Guthaben oder dergleichen.

Die CPU des Prozessors 140 übernimmt die Aufgaben zur Initialisierung einer Kommunikation eines Terminals mit der Chipkarte 100, zur Authentifikation sowie zur Entschlüsselung und Zertifikatsüberprüfung bei Empfang des erfindungsgemäß übertragenen Teils des Algorithmuscodes, wobei ein hierzu erforderlicher Programmcode in dem ROM 150 gespeichert sein kann. Zur Durchführung der weiteren Kommunikation mit dem Terminal, wie z. B. zur Durchführung sicherheitsspezifischer Funktionen, wie z. B. dem Abheben eines in dem ROM 150 gespeicherten Guthabens, oder eines kryptographischen Algorithmus, um eine Kontobuchungstransaktion auszuführen, wird die CPU des Prozessors 140 durch einen Programmcode programmgesteuert, welcher sich während einer Kommunikation der Chipkarte 100 mit dem Terminal erfindungsgemäß zumindest teilweise in dem mit dem Prozessor 140 verbundenen RAM 130 und andernfalls entweder überhaupt nicht oder nur teilweise in dem ROM 150 auf der Chipkarte 100 befindet. Ein potentieller Angreifer, der im Besitz der Chipkarte 100 ist, kann folglich, wie es im vorhergehenden beschrieben wurde, die Sicherheitsberechnungen durch den Prozessor 140 nicht ausführen, da Teile des Algorithmuscodes fehlen und erst bei Kommunikation der Chipkarte mit dem Terminal in dem flüchtigen Speicher 130 gespeichert werden.

In Fig. 3 ist ein Blockdiagramm gezeigt, das den Terminalaufbau gemäß einem Ausführungsbeispiel der vorliegenden Erfindung zeigt. Das Terminal, das allgemein mit 200 angezeigt ist, umfaßt eine Datenschnittstelle 210, eine Energieschnittstelle 220, einen mit der Datenschnittstelle 210 und der Energieschnittstelle 220 verbundenen Prozessor 230 und einen mit dem Prozessor 230 verbundenen Speicher 240. Die Datenschnittstelle 210 ist mit der Datenschnittstelle einer entsprechenden Chipkarte koppelbar, um einen Datenaustausch zwischen dem Terminal 200 und der Chipkarte (nicht gezeigt) durchzuführen. Die Energieschnittstelle 220 ist ebenfalls mit einer Energieschnittstelle der entsprechenden Chipkarte koppelbar, um Versorgungsenergie zu derselben zu liefern. Der Prozessor 230 steuert beispielsweise den Ablauf während der Kommunikation des Terminals 200 mit der Chipkarte und führt beispielsweise die Initialisierung, Authentifikation, die Verschlüsselung des zu übertragenden Algorithmuscodes, der in dem Speicher 240 gespeichert ist, die Zertifizierung desselben und die Übertragung des verschlüsselten und zertifizierten Algorithmuscodes zu der Datenschnittstelle 210 für eine Übertragung an die Chipkarte durch.

Es sei darauf hingewiesen, daß der Speicher 240 den Algorithmuscode beispielweise bereits in verschlüsselter Form enthalten kann, so daß der Prozessor 230 denselben nicht verschlüsseln muß, und derselbe weder in dem Speicher 240 noch anderswo in Klartext vorliegt.

Bezugnehmend auf die vorhergehende Beschreibung wird darauf hingewiesen, daß sich dieselbe lediglich auf spezielle Ausführungsbeispiele bezog. Die gegenseitige Authentifikation und die Verschlüsselung des übertragenen Teils des Algorithmuscodes sowie die Zertifizierung können beispielsweise bei speziellen Anwendungen weggelassen werden. Durch die erfindungsgemäße Speicherung zumindest eines Teils des Algorithmuscodes in einem flüchtigen Speicher der Chipkarte allein wird es einem potentiellen Angreifer sehr schwer gemacht, sicherheitskritische Funktionen der Chipkarte, wie z. B. Verschlüsselungsalgorithmen und Zugriffsfunktionen auf chipkartenspezifische Informationen, wie z. B. ein Guthaben, usw., auszuführen, da diese nicht dauerhaft auf der Chipkarte gespeichert sind und sich damit nicht in Besitz des potentiellen Angreifers befinden, sondern dieselben vielmehr bei Wegfall des Versorgungsenergieempfangs verloren gehen. Der Versuch, den flüchtigen Speicher vor Verlust der Funktion zu schützen, gestaltet sich als äußerst diffizil und kann als praktisch nicht realisierbar gelten.

Es wird ferner darauf hingewiesen, daß die erfindungsgemäßen Verfahren, das erfindungsgemäße Terminal und die erfindungsgemäße Chipkarte auf verschiedene Arten und Weisen implementiert sein können. Die entsprechenden Schritte bzw. Einrichtungen können mittels Software, Firmware oder Hardware in Verbindung mit nicht-flüchtigen Speichern implementiert sein. Zudem soll der Begriff Chipkarte, wie er im vorhergehenden verwendet wurde, nicht auf die Form einer Karte begrenzt sein, sondern vielmehr sollen auch alle anderen Formen von Chipträgern umfasst sein, die auf ähnliche Weise verwendet werden.

Eine derzeitige Realisierungsmöglichkeit der vorliegenden Erfindung besteht beispielsweise in dem Prozessor der Produktfamilie SLE66CX320P der Firma Infineon AG, der es durch eine MMU (MMU = Memory Management Unit = Speicherverwaltungseinheit) ermöglicht, einen in einem RAM gespeicherten Code auszuführen, indem dieselbe Speicherzugriffe auf den RAM steuert. Im einfachsten Fall würde bereits durch das Übertragen verschlüsselter Sprungadressen oder Speicheradressen von dem Terminal zu der Chipkarte wirksam verhindert werden, daß von einem potentiellen Angreifer ein "nativ-code" bzw. Maschinencode geladen werden kann. Ein Angreifer könnte bereits bei einer solchen einfachen Realisierung der vorliegenden Erfindung die Sicherheitsberechnungen in der Chipkarte nicht ausführen, da die Sprungadressen und damit die Abläufe unbekannt wären. Durch das Erstellen einer Application-Note kann dem Kunden eines solchen Bausteins diese Idee vermittelt werden und hierdurch die Sicherheit der Anwendung bei entsprechender Umsetzung in der Controller-Software der Chipkarte und in der Terminal-Software erhöht werden.

Potentiellen Angreifern, die im Besitz einer erfindungsgemäßen Chipkarte sind, liegen nur die geschützten Daten vor, sie können aber weder eine Verrechnung initiieren, noch den Algorithmuscode exakt bestimmen. In Kombination mit gesicherten Terminals und intelligenten Zugriffsschutzmechanismen betreffend der Nachladbarkeit von Programmteilen liefert die vorliegende Erfindung somit eine sehr hohe Sicherheit.

## Patentansprüche

1. Sicherheitsmodul zur Verwendung mit einem Terminal, mit einer Datenschnittstelle (110), die mit einem Terminal koppelbar ist, zum Empfangen zumindest eines Teils eines Algorithmuscodes oder des vollständigen Algorithmuscodes von dem Terminal, wobei der Algorithmuscode eine Verarbeitung von Geheimnissen betrifft;
einer Energieschnittstelle (120) zum Empfangen von Versorgungsenergie von dem Terminal;
einem Speicher (130) zum Speichern des über die Datenschnittstelle (110) empfangenen Teils des Algorithmuscodes oder des vollständigen Algorithmuscodes; und
einem Prozessor (140) zum Ausführen des Algorithmuscodes, um ein Algorithmuscodeergebnis zu erhalten, das zu dem Terminal lieferbar ist,
**dadurch gekennzeichnet, daß**
der Speicher (130) ein flüchtiger Speicher ist, und daß der Speicher (130) so mit der Energieschnittstelle (120) gekoppelt ist, um mit Energie versorgt zu werden, daß derselbe auf eine Unterbrechung des Empfangs der Versorgungsenergie von dem Terminal hin gelöscht wird.

2. Sicherheitsmodul gemäß Anspruch 1, das ferner folgendes Merkmal aufweist:
einen nicht-flüchtigen Speicher (150), in dem der nicht empfangene Rest des Algorithmuscodes gespeichert ist.

3. Sicherheitsmodul gemäß Anspruch 1 oder 2, das ferner folgendes Merkmal aufweist:
eine Einrichtung (140, 150) zum Durchführen einer Authentifikation zwischen dem Terminal und dem Sicherheitsmodul.

4. Sicherheitsmodul gemäß einem der Ansprüche 1 bis 3, bei dem die Datenschnittstelle (110) angeordnet ist, um von dem Terminal den Teil des Algorithmuscodes oder den vollständigen Algorithmuscode in verschlüsselter Form und/oder ein Zertifikat zu erhalten, wobei das Sicherheitsmodul ferner folgende Merkmale aufweist:
eine Einrichtung (140, 150) zum Entschlüsseln des Teils des verschlüsselten Algorithmuscodes oder des verschlüsselten vollständigen Algorithmuscodes; und
eine Einrichtung (140, 150) zum Überprüfen des Zertifikats und zum Verhindern des Ausführens des Algorithmuscodes bei fehlender Echtheit des Zertifikats.

5. Sicherheitsmodul gemäß einem der Ansprüche 1 bis 4, das ferner folgendes Merkmal aufweist:
eine Speicherverwaltungseinheit zum Steuern von Speicherzugriffen des Prozessors, wobei der übertragenen Teil des Algorithmuscodes Adressen des Algorithmuscodes enthält.

6. Sicherheitsmodul gemäß einem der Ansprüche 1 bis 5, das ferner folgendes Merkmal aufweist:
eine Einrichtung zum Überwachen einer vorbestimmten Sicherheitsbedingung und zum Löschen des flüchtigen Speichers (130), falls die vorbestimmte Sicherheitsbedingung erfüllt ist, wobei die Sicherheitsbedingung aus einer Mehrzahl von Bedingungen ausgewählt ist, die eine Unterbrechung, eine Unregelmäßigkeit und eine Schwankung der Versorgungsspannung und eines Systemtaktes und weiterer Betriebsparameter umfaßt.

7. Sicherheitsmodul gemäß einem der Ansprüche 1 bis 6, bei dem der Algorithmuscode einen Programmcode aufweist, der zur Ausführung einer Aufgabe vorgesehen ist, die aus einer Gruppe ausgewählt ist, die einen symmetrischen Kryptographiealgorithmus, einen asymmetrischen Kryptographiealgorithmus, einen RSA-Algorithmus, ein Kryptographieverfahren nach dem DES-Standard, ein Elliptisches-Kurven-Verfahren und eine Zugriffsfunktion zum Zugreifen und eine Zugriffsfunktion zum Verändern eines auf dem Sicherheitsmodul gespeicherten Werts umfaßt.

8. Sicherheitsmodul gemäß einem der Ansprüche 1 bis 7, bei dem der empfangene Teil des Algorithmuscodes eine Startadresse des Algorithmuscodes, Speicheradressen von für die Ausführung des Algorithmuscodes erforderlichen Berechnungskomponenten oder Sprungadressen des Algorithmuscodes aufweist.

9. Sicherheitsmodul gemäß einem der Ansprüche 1 bis 8, bei dem der flüchtige Speicher (130) angeordnet ist, um den gespeicherten Teil des Algorithmuscodes oder den gespeicherten vollständigen Algorithmuscode mit einem neu empfangenen, veränderten Teil des Algorithmuscodes zu überspeichern.

10. Sicherheitsmodul gemäß einem der Ansprüche 1 bis 9, wobei das Sicherheitsmodul als Chipkarte ausgeführt ist.

11. Verfahren zum Berechnen eines Algorithmuscodeergebnisses unter Verwendung eines Sicherheitsmoduls, mit folgenden Schritten:
Empfangen (40) zumindest eines Teils eines Algorithmuscodes oder des vollständigen Algorithmuscodes mittels einer Energieschnittstelle (120), wobei der Algorithmuscode eine Verarbeitung von Geheimnissen betrifft;
Speichern (50) des Teils des Algorithmuscodes oder des vollständigen Algorithmuscodes in einem Speicher (130) des Sicherheitsmoduls;
Ausführen (60) des Algorithmuscodes auf dem Sicherheitsmodul, um ein Algorithmuscodeergebnis zu erhalten;
Liefern (60) des Algorithmuscodeergebnisses zu dem Terminal; und
Löschen (70) des Speichers (130),
**dadurch gekennzeichnet, daß**
der Schritt des Speicherns durch flüchtiges Speichern in einem flüchtigen Speicher (130) durchgeführt wird, wobei der flüchtige Speicher (130) so mit der Energieschnittstelle (120) gekoppelt ist, um mit Energie versorgt zu werden, daß derselbe auf eine Unterbrechung des Empfangs der Versorgungsenergie von dem Terminal hin gelöscht wird.

12. Verfahren gemäß Anspruch 11, bei dem der Schritt des Löschens (70) das Entfernen des Sicherheitsmoduls von dem Terminal aufweist.

13. Terminal zur Verwendung mit einem Sicherheitsmodul, mit folgenden Merkmalen:
einer Datenschnittstelle (210), die mit dem Sicherheitsmodul (100) koppelbar ist, zum Senden zumindest eines Teils eines Algorithmuscodes oder des vollständigen Algorithmuscodes von dem Terminal zu einem Speicher (130) des Sicherheitsmoduls (100) und zum Empfangen eines Algorithmuscodeergebnisses von dem Sicherheitsmodul, wobei der Algorithmuscode eine Verarbeitung von Geheimnissen betrifft; und
einer Energieschnittstelle (220) zum Liefern von Versorgungsenergie zu dem Sicherheitsmodul,
**dadurch gekennzeichnet, daß**
der Speicher (130) ein flüchtiger Speicher (130) ist, und daß der Speicher (130) von der Versorgungsenergie versorgt wird, so daß derselbe auf eine Unterbrechung des Empfangs der Versorgungsenergie von dem Terminal hin gelöscht wird, und daß
das Terminal ausgebildet ist, um während ein und desselben Kommunikationsvorganges mit dem Sicherheitsmodul
zumindest den Teil des Algorithmuscodes oder den vollständigen Algorithmuscode zu dem flüchtigen Speicher (130) des Sicherheitsmoduls (100) zu senden; und
danach während des weiteren Kommunikationsablaufes das Algorithmuscodeergebnis von dem Sicherheitsmodul zu empfangen.

14. Verfahren zum Steuern eines Sicherheitsmoduls unter Verwendung eines Terminals, um von dem Sicherheitsmodul ein Algorithmuscodeergebnis zu erhalten, wobei das Verfahren die Durchführung folgender Schritte während ein und desselben Kommunikationsvorganges mit dem Sicherheitsmodul umfaßt:
Liefern von Versorgungsenergie von dem Terminal zu dem Sicherheitsmodul;
Senden (60) zumindest eines Teils eines Algorithmuscodes oder des vollständigen Algorithmuscodes von dem Terminal zu einem Speicher (130) des Sicherheitsmoduls, wobei der Algorithmuscode eine Verarbeitung von Geheimnissen betrifft; und
Empfangen (60) des Algorithmuscodeergebnisses von dem Sicherheitsmodul,
**dadurch gekennzeichnet, daß**
der Speicher (130) ein flüchtiger Speicher (130) ist, und daß der Speicher (130) so von der Versorgungsenergie versorgt wird, daß derselbe auf eine Unterbrechung des Empfangs der Versorgungsenergie von dem Terminal hin gelöscht wird.

15. Verfahren zur Kommunikation zwischen einem Sicherheitsmodul und einem Terminal, mit folgenden Schritten:
Übertragen (40) zumindest eines Teils eines Algorithmuscodes oder des vollständigen Algorithmuscodes von dem Terminal zu dem Sicherheitsmodul, wobei der Algorithmuscode eine Verarbeitung von Geheimnissen betrifft;
Speichern (50) des Teils des Algorithmuscodes oder des vollständigen Algorithmuscodes in einem Speicher (130) des Sicherheitsmoduls;
Ausführen (60) des Algorithmuscodes auf dem Sicherheitsmodul, um ein Algorithmuscodeergebnis zu erhalten;
Liefern (60) des Algorithmuscodeergebnisses zu dem Terminal; und
Löschen (70) des Speichers (130),
**dadurch gekennzeichnet, daß**
der Speicher (130) ein flüchtiger Speicher (130) ist, und daß der Speicher (130) von der Versorgungsenergie versorgt wird, so daß derselbe auf eine Unterbrechung des Empfangs der Versorgungsenergie von dem Terminal hin gelöscht wird.

16. Verfahren gemäß Anspruch 15, das ferner folgenden Schritt aufweist:
wiederholtes Übertragen einer einer Mehrzahl von unterschiedlichen Fassungen des Teils des Algorithmuscodes oder des vollständigen Algorithmuscodes; und
Überspeichern des gespeicherten Teils des Algorithmuscodes oder des vollständigen gespeicherten Algorithmuscodes durch die wiederholt übertragene Fassung des Teil des Algorithmuscodes oder des vollständigen Algorithmuscodes.

## Claims

1. A security module for use with a terminal, comprising
a data interface (110) adapted to be coupled to a terminal, for receiving at least part of an algorithm code or of the complete algorithm code from the terminal, with the algorithm code concerning a processing of secrets,
an energy interface (120) for receiving supply energy from the terminal;
a memory (130) for storing the part of the algorithm code or the complete algorithm code received via the data interface (110); and
a processor (140) for performing the algorithm code in order to obtain an algorithm code result that can be delivered to the terminal,
**characterized in that**
said memory (130) is a volatile memory and that the memory (130) is coupled in such a way to the energy interface in order to have energy supplied thereto that the same will be cleared upon an interruption of the receipt of the supply energy from the terminal.

2. A security module according to claim 1, further comprising:
a non-volatile memory (150) in which the non-received remainder of the algorithm code is stored.

3. A security module according to claim 1 or 2, further comprising:
a means (140, 150) for performing an authentication between the terminal and the security module.

4. A security module according to any of claims 1 to 3, wherein the data interface (110) is arranged to receive from the terminal said part of the algorithm code or the complete algorithm code in encrypted form and/or a certificate, with the security module further comprising:
a means (140, 150) for decrypting said part of the encrypted algorithm code or the encrypted complete algorithm code; and
a means (140, 150) for examining the certificate and for preventing performing of the algorithm code if said certificate lacks genuineness.

5. A security module according to any of claims 1 to 4, further comprising:
a memory managing unit for controlling memory accesses of the processor, with the transferred part of the algorithm code containing addresses of the algorithm code.

6. A security module according to any of claims 1 to 5, further comprising:
a means for monitoring a predetermined security condition and for clearing the volatile memory (130) if said predetermined security condition is fulfilled, with said security condition being selected from a plurality of conditions comprising an interruption, an irregularity and a fluctuation of the supply voltage and of a system clock as well as of additional operating parameters.

7. A security module according to any of claims 1 to 6, wherein the algorithm code comprises a program code selected for carrying out a task selected from a group comprising a symmetric cryptographic algorithm, an asymmetric cryptographic algorithm, an RSA algorithm, a cryptographic process according to the DES standard, an elliptic curve process and an access function for accessing as well as an access function for changing a value stored on the security module.

8. A security module according to any of claims 1 to 7, wherein the part received of the algorithm code comprises a start address of the algorithm code, memory addresses of computing components necessary for performing the algorithm code, or jump addresses of the algorithm code.

9. A security module according to any of claims 1 to 8, wherein the volatile memory (130) is arranged for storing a newly received, altered part of the algorithm code over the stored part of the algorithm code or the stored complete algorithm code.

10. A security module according to any of claims 1 to 9, wherein said security module is designed as a chip card.

11. A process for computing an algorithm code result using a security module, comprising the steps of:
receiving (140) at least part of an algorithm code or the complete algorithm code by means of an energy interface (120), with the algorithm code concerning a processing of secrets;
storing (50) said part of the algorithm code or said complete algorithm code in a memory (130) of the security module,
performing (60) said algorithm code on the security module in order to obtain an algorithm code result;
delivering (60) said algorithm code result to the terminal; and
clearing (70) said volatile memory (130)
**characterized in that**
the step of storing is performed by volatile-storing (130), with the volatile memory (130) being coupled to the energy interface to be supplied with energy, such that the same will be cleared upon an interruption of the receipt of the supply energy from the terminal.

12. A process according to claim 11, wherein said step of clearing (70) comprises removing the security module from the terminal.

13. A terminal for use with a security module, comprising:
a data interface (210) adapted to be coupled to the security module (100), for transmitting at least part of an algorithm code or the complete algorithm code from the terminal to a memory (130) of the security module (100) and for receiving the algorithm code result from the security module, with the algorithm code concerning a processing of secrets; and
an energy interface (220) for delivering supply energy to the security module,
**characterized in that**
the memory (130) is a volatile memory (130) and that the volatile memory being supplied by the supply energy, such that the same will be cleared upon an interruption of the receipt of the supply energy from the terminal,
the terminal is designed to, during one and the same communication operation with the security module,
send at least the part of the algorithm code or the complete algorithm code to the volatile memory (130) of the security module (100); and,
subsequently, during the further communication process, receive the algorithm code result from the security module.

14. A process for controlling a security module using a terminal in order to obtain an algorithm code result from the security module, with the process comprising the performance of the following steps during one and the same communication operation with the security module:
delivering supply energy from the terminal to the security module;
transmitting (60) at least part of an algorithm code or the complete algorithm code from the terminal to a memory (130) of the security module, with the algorithm code concerning a processing of secrets; and
receiving (60) the algorithm code result from the security module,
**characterized in that**
the memory (130) is a volatile memory (130) and with the memory (130) being supplied by the supply energy, such that the same will be cleared upon an interruption of the receipt of the supply energy from the terminal

15. A process for communication between a security module and a terminal, comprising the steps of:
transferring (40) at least part of an algorithm code or the complete algorithm code from the terminal to the security module, with the algorithm code concerning a processing of secrets;
storing (50) said part of the algorithm code or said complete algorithm code in a memory (130) of the security module;
performing (60) said algorithm code on the security module in order to obtain an algorithm code result;
delivering (60) said algorithm code result to the terminal; and
clearing (70) said memory (130),
**characterized in that**
the memory (130) is a volatile memory (130) and that the volatile memory is supplied by the supply energy, such that the same will be cleared upon interruption of the receipt of the supply energy from the terminal.

16. A process according to claim 15, further comprising:
repeated transferring of a plurality of different versions of said part of the algorithm code or said complete algorithm code; and
storing the repeatedly transferred version of said part of the algorithm code or of the complete algorithm code over the stored part of the algorithm code or over the complete stored algorithm code.

## Revendications

1. Module de sécurité pour utilisation avec un terminal, comportant
une interface (110) de données, qui peut être couplée à un terminal, pour recevoir au moins une partie d'un code d'algorithme ou la totalité du code d'algorithme du terminal, le code d'algorithme concernant un traitement de secrets ;
une interface (120) d'énergie pour recevoir de l'énergie d'alimentation du terminal ;
une mémoire (130) pour mettre en mémoire la partie du code d'algorithme ou la totalité du code d'algorithme reçue par l'intermédiaire de l'interface (110) de données ; et
un processeur (140) pour exécuter le code d'algorithme afin d'obtenir un résultat de code d'algorithme qui peut être fourni au terminal,
**caractérisé en ce que**
la mémoire (130) est une mémoire non volatile, et **en ce que** la mémoire (130) est couplée à l'interface (120) d'énergie, afin d'être alimentée en énergie, de telle façon que ladite mémoire est effacée à la suite d'une interruption de la réception de l'énergie d'alimentation du terminal.

2. Module de sécurité suivant la revendication 1, qui comporte, de plus, la caractéristique suivante :
une mémoire (150) non volatile dans laquelle est mise en mémoire la partie non reçue du code d'algorithme.

3. Module de sécurité suivant la revendication 1 ou 2, qui comporte, de plus, la caractéristique suivante :
un dispositif (140, 150) pour effectuer une authentification entre le terminal et le module de sécurité.

4. Module de sécurité suivant l'une des revendications 1 à 3, dans lequel l'interface (110) de données est prévue pour recevoir du terminal la partie du code d'algorithme ou la totalité du code d'algorithme sous forme codée et/ou un certificat, le module de sécurité comportant, de plus, les caractéristiques supplémentaires suivantes :
un dispositif (140, 150) pour décoder la partie du code d'algorithme codée ou la totalité du code d'algorithme codée ; et
un dispositif (140, 150) pour vérifier le certificat et pour empêcher l'exécution du code d'algorithme dans le cas où la véracité du certificat fait défaut.

5. Module de sécurité suivant l'une des revendications 1 à 4, qui comporte, de plus, la caractéristique suivante :
une unité de gestion de mémoire pour commander des accès de mémoire du processeur, la partie transmise du code d'algorithme contenant des adresses du code d'algorithme.

6. Module de sécurité suivant l'une des revendications 1 à 5, qui comporte, de plus, la caractéristique suivante :
un dispositif pour surveiller une condition de sécurité prédéterminée et pour effacer la mémoire (130) volatile, dans le cas où la condition de sécurité prédéterminée est satisfaite, la condition de sécurité étant sélectionnée dans une pluralité de conditions qui comprend une interruption, une irrégularité et une fluctuation de la tension d'alimentation et d'un cycle de système et d'autres paramètres de fonctionnement.

7. Module de sécurité suivant l'une des revendications 1 à 6, dans lequel le code d'algorithme comprend un code de programme qui est prévu pour exécuter une tache qui est sélectionnée dans un groupe, qui comprend un algorithme de cryptographie symétrique, un algorithme de cryptographie asymétrique, un algorithme RSA, un procédé de cryptographie suivant la norme DES, un procédé à courbe elliptique et une fonction d'accès pour accéder et une fonction d'accès pour modifier une valeur mise en mémoire sur le module de sécurité.

8. Module de sécurité suivant l'une des revendications 1 à 7, dans lequel la partie reçue du code d'algorithme comporte une adresse de départ du code d'algorithme, des adresses de mémoire de composantes de calcul nécessaires pour exécuter le code d'algorithme ou des adresses de saut du code d'algorithme.

9. Module de sécurité suivant l'une des revendications 1 à 8, dans lequel la mémoire (130) volatile est prévue pour mettre en mémoire une partie modifiée, nouvellement reçue, du code d'algorithme sur la partie mise en mémoire du code d'algorithme ou la totalité du code d'algorithme mise en mémoire.

10. Module de sécurité suivant l'une des revendications 1 à 9, le module de sécurité étant réalisé en carte à puce.

11. Procédé pour calculer un résultat de code d'algorithme en utilisant un module de sécurité, comportant les étapes suivantes :
réception (40) d'au moins une partie d'un code d'algorithme ou de la totalité du code d'algorithme au moyen d'une interface (120) d'énergie, le code d'algorithme concernant un traitement de secrets ;
mise en mémoire (50) de la partie du code d'algorithme ou de la totalité du code d'algorithme dans une mémoire (130) du module de sécurité ;
exécution (60) du code d'algorithme sur le module de sécurité afin d'obtenir un résultat de code d'algorithme ;
fourniture (60) du résultat de code d'algorithme au terminal ;
et
effaçage (70) de la mémoire (130),
**caractérisé en ce que**
l'étape de la mise en mémoire est effectuée par mise en mémoire volatile dans une mémoire (130) volatile, la mémoire (130) volatile étant couplée à l'interface (120) d'énergie, afin d'être alimentée en énergie, de telle façon qu'elle est effacée à la suite d'une interruption de la réception de l'énergie d'alimentation du terminal.

12. Procédé suivant la revendication 11, dans lequel l'étape de l'effaçage (70) comporte l'éloignement du module de sécurité du terminal.

13. Terminal pour utilisation avec un module de sécurité, comportant les caractéristiques suivantes :
une interface (210) de données, qui peut être couplée au module (100) de sécurité, pour émettre au moins une partie d'un code d'algorithme ou la totalité du code d'algorithme du terminal à une mémoire (130) du module (100) de sécurité et pour recevoir un résultat de code d'algorithme du module de sécurité, le code d'algorithme concernant un traitement de secrets ; et
une interface (220) d'énergie pour fournir de l'énergie d'alimentation au module de sécurité,
**caractérisé en ce que**
la mémoire (130) est une mémoire (130) volatile, et **en ce que** la mémoire (130) est alimentée en l'énergie d'alimentation de telle manière qu'elle est effacée à la suite d'une interruption de la réception de l'énergie d'alimentation du terminal, et **en ce que**
le terminal est réalisé pour, pendant une seule et même opération de communication avec le module de sécurité,
émettre au moins une partie du code d'algorithme ou la totalité du code d'algorithme à destination de la mémoire (130) volatile du module (100) de sécurité ; et
recevoir ensuite, pendant le reste du déroulement de la communication, le résultat d'algorithme du module de sécurité.

14. Procédé pour commander un module de sécurité en utilisant un terminal, afin d'obtenir du module de sécurité un résultat de code d'algorithme, le procédé comportant l'exécution des étapes suivantes pendant une seule et même opération de communication avec le module de sécurité :
fourniture d'énergie d'alimentation du terminal au module de sécurité ;
émission (60) d'au moins une partie d'un code d'algorithme ou de la totalité du code d'algorithme du terminal vers une mémoire (130) du module de sécurité, le code d'algorithme concernant un traitement de secrets ; et
réception (60) du résultat de code d'algorithme du module de sécurité,
**caractérisé en ce que**
la mémoire (130) est une mémoire (130) volatile et **en ce que** la mémoire (130) est alimentée en l'énergie d'alimentation de manière à être effacée à la suite d'une interruption de la réception de l'alimentation d'énergie du terminal.

15. Procédé pour la communication entre un module de sécurité et un terminal, comportant les étapes suivantes :
transmission (40) d'au moins une partie d'un code d'algorithme ou de la totalité du code d'algorithme au module de sécurité, le code d'algorithme concernant un traitement de secrets ;
mise en mémoire (50) de la partie du code d'algorithme ou de la totalité du code d'algorithme du terminal dans une mémoire (130) du module de sécurité ;
exécution (60) du code d'algorithme sur le module de sécurité afin d'obtenir un résultat de code d'algorithme ;
fourniture (60) du résultat de code d'algorithme au terminal ;
et
effaçage (70) de la mémoire (130),
**caractérisé en ce que**
la mémoire (130) est une mémoire (130) volatile, et **en ce que** la mémoire (130) est alimentée en l'énergie d'alimentation de telle manière qu'elle est effacée à la suite d'une interruption de la réception de l'énergie d'alimentation du terminal.

16. Procédé suivant la revendication 15, qui comporte, de plus, l'étape suivante :
transmission répétée d'une formulation d'une pluralité de formulations différentes de la partie du code d'algorithme ou de la totalité du code d'algorithme ; et
mise en mémoire sur la partie mise en mémoire du code d'algorithme ou de la totalité du code d'algorithme mise en mémoire de la formulation transmise de manière répétée de la partie du code d'algorithme ou de la totalité du code d'algorithme.
